(19) Europäisches Patentamt

European Patent Office

Office européen des brevets

(11) **EP 1 298 089 B1**

(12) **EUROPEAN PATENT SPECIFICATION**

(45) Date of publication and mention
of the grant of the patent:
**19.01.2005 Bulletin 2005/03**

(21) Application number: **00938832.3**

(22) Date of filing: **22.06.2000**

(51) Int Cl.[7]: **C01B 3/32**, B01J 23/80

(86) International application number:
**PCT/ES2000/000221**

(87) International publication number:
**WO 2001/098202 (27.12.2001 Gazette 2001/52)**

(54) **METHOD FOR OBTAINING HYDROGEN BY PARTIAL METHANOL OXIDATION**

VERFAHREN ZUR HERSTELLUNG VON WASSERSTOFF DURCH PARTIELLE
METHANOLOXYDATION

PROCEDE D'OBTENTION D'HYDROGENE PAR OXYDATION PARTIELLE DU METHANOL

(84) Designated Contracting States:
**AT BE CH CY DE DK ES FI FR GB GR IE IT LI LU
MC NL PT SE**

(43) Date of publication of application:
**02.04.2003 Bulletin 2003/14**

(73) Proprietor: **CONSEJO SUPERIOR DE
INVESTIGACIONES CIENTIFICAS
E-28006 Madrid (ES)**

(72) Inventors:
• **MURCIA MASCAR S, Sonia**
**E-28030 Madrid (ES)**
• **GOMEZ SAINERO, Luisa-Maria**
**E-28320 Pinto (ES)**
• **GARCIA FIERRO, José-Luis**
**E-28002 Madrid (ES)**
• **PENA JIMENEZ, Miguel-Antonio**
**E-28043 Madrid (ES)**

• **COSTANTINO, Umberto-Michele**
**I-06127 Perugia (IT)**
• **NOCCHETTI, Morena**
**I-06128 Perugia (IT)**

(74) Representative: **Carpintero Lopez, Francisco
Herrero & Asociados, S.L.,
Alcalá, 35
28014 Madrid (ES)**

(56) References cited:
**EP-A- 0 042 471          EP-A- 0 592 958
FR-A- 2 181 795          US-A- 6 051 163**

• **L. ALEJO ET AL.: 'Partial oxidation of methanol
to produce hydrogen over Cu-Zn-based
catalysts' APPLIED CATALYSIS vol. 162, 1997,
ELSEVIER, pages 281 - 297, XP004338244**

**Description**

**SCOPE OF THE INVENTION**

The invention relates to a method for preparing a ternary catalytic system containing copper, zinc and aluminium, suitable for the conversion of methanol into hydrogen, comprising the calcination of a precipitate, which results from placing in contact a solution of urea and a solution of salts of the corresponding metals.

**BACKGROUND OF THE INVENTION**

The production of hydrogen gas from methanol can be achieved by the partial oxidation of methanol (POM) or by steam reforming (SRM). In certain reaction conditions, hydrogen and carbon dioxide are produced according to the following equations:

$$POM: CH_3OH + \tfrac{1}{2}O_2 \rightleftarrows CO_2 + 2H_2$$

$$SRM: CH_3OH + H_2O \rightleftarrows CO_2 + 3H_2$$

During synthesis of hydrogen, carbon monoxide is produced as a by-product in the decomposition of methanol, which occurs in the reactor according to:

$$CH_3OH \rightleftarrows CO + 2H_2$$

Conversion of methanol to hydrogen gas is one of the most widely used techniques in the automobile sector, particularly in its application to fuel cells. For this purpose the hydrogen must have a low CO content, equal to or less than 10 ppm.

Catalytic systems are known which perform both procedures based on copper and zinc supported on aluminium oxide ($Al_2O_3$) or silicon oxide ($SiO_2$) [US 4,789,540, US 4.897.253]. Also described are catalytic systems prepared from calcium salts instead of copper [US 5,904,880] and others which use diatomes as a support [EP 592958].

These catalysts have been tested for hydrogen production using one of the aforementioned processes, POM and/or SRM. In general results have been similar, as a high conversion of methanol is obtained with a quantitative production of hydrogen and carbon dioxide. However, in all cases in general there was a production of CO of up to 5%. In order to eliminate this amount of CO it is necessary to introduce an additional catalytic system for conversion of CO into $CO_2$ by oxidation, or into methane by reduction, which increases the total cost and implies greater complexity.

**SUMMARY OF THE INVENTION**

The invention faces the problem of developing an alternative to currently existing processes for obtaining a catalyst for hydrogen production from methanol.

The solution taught by the invention consists in the method for preparing a catalyst by calcination of a precipitate, which results from placing in contact a solution of urea and a solution of salts of copper, zinc and aluminium.

The catalyst obtained by the process of the invention allows obtaining a high degree of conversion of methanol, a selective production of hydrogen and in addition a small amount of CO, as shown in example 3. amount of CO, as shown in example 3.

Thus, the object of the invention is a method according to claim 1 for obtaining a catalyst, which comprises the co-precipitation of salts of copper, zinc and aluminium by urea.

**DETAILED DESCRIPTION OF THE INVENTION**

The process of the invention provides a catalyst suited to the conversion of methanol into hydrogen, comprising copper (II) oxide, zinc (II) oxide, aluminium (III) oxide and copper (II) and aluminium (III) spinel, in the following molar percentages:

| Molar % of metals with respect to the total | |
|---|---|
| Copper | 15-75 |
| Zinc | 5-60 |
| Aluminium | 3-50 |

In the catalyst obtained by the process of the invention the copper, zinc and aluminium are present in the form of their respective oxides (copper (II), zinc and aluminium) and copper and aluminium spinel.

In a specific embodiment, the catalyst obtained by the process of the invention is chosen from among the group of catalysts having the following compositions:

| Catalyst | Composition(%)* | | |
|---|---|---|---|
| | **Cu** | **Zn** | **Al** |
| A | 21.9 | 37.1 | 40.9 |
| B | 54.3 | 18.7 | 26.6 |
| C | 50.0 | 43.9 | 5.7 |
| D | 61.3 | 9.0 | 29.9 |
| E | 49.8 | 14.6 | 35.4 |
| F | 48.7 | 17.3 | 33.9 |
| G | 25.8 | 49.1 | 24.9 |
| H | 70.2 | 21.6 | 8.2 |

[* Molar percentages of the metals in the catalyst]

The catalyst obtained by the process of the invention may be obtained by an innovative method which involves precipitation of copper (II), zinc (II) and aluminium (III) salts which are precursors of the corresponding oxides, by means of urea. In this way a ternary Cu-Zn-Al catalytic system is obtained with co-precipitation of the three components, instead of a system obtained by impregnation or absorption of the support material, as occurs in the catalysts described in US 4,789,540 and US 4,897,253.

The method of the invention is disclosed for obtaining a catalyst which involves:

a) placing in contact urea and an aqueous solution containing water-soluble salts of copper (II), zinc (II) and aluminium (III) and heating to a temperature above 60°C;
b) separating the precipitate obtained in stage a) and washing it until wash water has a pH of approximately 6;
c) drying the wash precipitate obtained in stage b); and
d) calcinating the dry precipitate of stage c).

The copper, zinc and aluminium may be obtained from any water-soluble salt which can provide the cations $Cu^{2+}$, $Zn^{2+}$ and $Al^{3+}$. In a particular embodiment, these salts are the corresponding chlorides. Urea can be added directly to an aqueous solution which contains the soluble salts of Cu, Zn and Al. Alternatively, the urea may be added to a mixture of two salts and the third salt added later (see examples 1 and 2). The amount of urea added is such that the molar ratio of urea/metals is at least 1, and preferably 3.

In general, the mixture of the soluble salts of Cu, Zn and Al can be made at ambient temperature, above 60°C and preferably to 90°C, as at this temperature the decomposition and hydrolysis of the urea take place faster. The pH of the reaction mixture increases gradually, as ammonium carbonate is formed, until the amorphous hydroxyl-carbonates begin to precipitate. In the final precipitate can be seen the prevailing formation of crystalline hydrotalcite phases, as well as other hydroxyl-chlorides and ammonium chlorides which can be identified by X-ray diffraction techniques. This precipitate is a precursor of the catalyst obtained by the process of the invention.

Before separating the precipitate obtained form adding urea to the mixture of water-soluble salts of copper, zinc and aluminium, if desired the precipitate formed can be allowed to age, maintaining stirring between 60°C and 100°C, and preferably at 90°C for a variable time of at least 12 hours, and generally for about 24 hours.

After this the precipitate, which as an option may be aged and separated by conventional methods such as filtration, is washed with water until wash water has a pH of approximately 6. It is then dried to remove the hydration water without decomposing the carbonates. In a specific embodiment, the washed precipitate is dried at a temperature between 50°C and 130°C for a variable period, such as 16 hours.

The dry precipitate is calcined in the presence of air at a temperature between 300°C and 450°C for between 3 and 5 hours. At this temperature the water and carbon dioxide are eliminated and the mixture of crystalline oxides of Cu, Zn, Al and Cu-Al remains (with crystal size between 5 y 60 nm). This mixture must be activated before it is used as a catalyst.

In order to activate the catalyst the mixture of oxides is placed in contact with a reducing gas and heated, following a suitable thermal cycle, to between 250°C and 500°C for between 1 and 5 hours, generating the active phase of copper metal. In a particular embodiment the reducing gas is hydrogen.

The catalyst obtained by the process of the invention is useful for the production of hydrogen by partial oxidation of methanol. For hydrogen production, the catalyst obtained by the process of the invention is advantageously used in the form of a powder with a particle size between 0.42 and 0.59 mm. The catalyst is introduced in a reactor with temperature reading means and a heating element. The reactor employed may be a tubular stainless steel reactor in which the catalyst particles are supported between two beds of quartz wool, which form a catalytic bed. It is also provided with a thermocouple for measuring the temperature, with its sensor element in the centre of the catalytic bed, and which is placed coaxial from the centre of the reactor to its top. An electric oven is used as the heating element in the reactor.

After this, the catalytic bed is activated by feeding a hydrogen-containing gas and heating from ambient temperature to between 250°C and 500°C following a suitable heating cycle. Said heating cycle consists of raising the temperature to 450°C at a rate of 3°C/minute, maintaining this temperature for 2 hours and lowering the temperature to 110°C. Then the methanol, oxygen and optionally water is added. In general, the gases are added using mass flow controllers and liquids are fed using a perfusor pump and an evaporator.

The reactants may be methanol and oxygen, or methanol, oxygen and water. The oxygen may be added as such or in the form of air or as an enriched mixture. If the reactants include water, the molar ratio of methanol:water:oxygen can vary between 1:1.1:0.3 and 1:1.1:0.5. Addition of water to the methanol/oxygen mixture in the reactor causes conversion of CO into $CO_2$ by a water-gas shift (WGS) reaction:

$$CO + H_2O \rightleftarrows CO_2 + H_2$$

The hydrogen production method by partial oxidation of methanol by means of the catalyst obtained by the process of this invention may be carried out at a temperature between 200°C and 400°C, at variable pressure, preferably at atmospheric pressure.

In a specific embodiment operating in gentle conditions, that is at low temperature between 250°C and 380°C and at atmospheric pressure, a high conversion of methanol was obtained and a production of hydrogen with 0.5% of CO, in a single stage and using the same catalytic system [see Table 2, example 3.2].

The method of hydrogen production by partial oxidation of methanol may be performed continuously or by loads.

The following examples are meant for purposes of illustration and are not meant to be considered as a definition of the limits of the invention.

## EXAMPLE 1

### Preparation of a catalyst

A mixture is prepared of 40 ml of a 0.5 M solution of $ZnCl_2$ (obtained by dissolving 1.63 g of ZnO in 3.3 ml of HCl 6 M and increasing to 40 ml with water) and 31 ml of a 0.5 M solution of $AlCl_3 \cdot 6H_2O$ (3.74 g in 31 ml of water) at ambient temperature. In the resulting mixture is dissolved 9.26 g of urea at ambient temperature, and the solution heated to 90°C. When it becomes opalescent, 15.5 ml are added of a 0.5 M solution of $CuCl_2 \cdot 2H_2O$ (1.32 g in 15.5 ml of water) drop by drop, stirring the solution at 90°C. The resulting precipitate is allowed to age at this temperature, stirred, for 24 hours and the resulting precipitate filtered until wash water has a pH of 6. It is then dried for 16 hours and finally calcined at 450°C for 5 hours. The catalyst obtained, known as catalyst A, has the following percentage composition(molar percentages of metals in the catalyst):

|  | Cu | Zn | Al |
|---|---|---|---|
| Catalyst A | 21.9 | 37.1 | 40.9 |

## EXAMPLE 2

### Preparation of a catalyst

A mixture is prepared of 50 ml of a 0.5 M solution of $ZnCl_2$ (obtained by dissolving 2.03 g of ZnO in 4.2 ml of HCl 6 M and increasing to 50 ml with water) and 50 ml of a 0.5 M solution of $AlCl_3 \cdot 6H_2O$ (6.0 g in 50 ml of water) at ambient temperature. In the resulting mixture are dissolved 15 g of urea at ambient temperature, and the solution heated to 90°C. When it becomes opalescent, 100 ml are added of a 0.5 M solution of $CuCl_2 \cdot 2H_2O$ (8.5 g in 100 ml of water) drop by drop, stirring the solution at 90°C. The resulting precipitate is allowed to age at this temperature, stirred, for 24 hours. The resulting precipitate is filtered and washed until wash water has a pH of 6. It is then dried at 80°C for 16 hours and finally calcined at 450°C for 5 hours. The catalyst obtained, known as catalyst B, has the following percentage composition (molar percentages of metals in the catalyst):

|            | Cu   | Zn   | Al   |
|------------|------|------|------|
| Catalyst B | 54.3 | 18.7 | 26.6 |

## EXAMPLE 3

### Conversion of methanol into hydrogen

<u>Common protocol</u>

A tablet is prepared of powder catalyst which is 12 mm in diameter and 2mm thick. This tablet is mechanically disaggregated and sifted to obtain catalyst particles of a size between 0.42 and 0.59 mm. 0.2 g of catalyst particles of this size are taken and placed in the centre of a tubular stainless-steel reactor with 6.2 mm inner diameter, 6.5 mm external diameter and 200 mm length. The catalyst particles are supported between two beds of quartz wool. This ensemble forms the catalytic bed. The reactor is provided with a thermocouple for measuring the temperature, with its sensor in the centre of the catalytic bed and placed coaxial from the centre of the reactor to its top. An electric oven is used as a heating element.
The catalytic bed is activated by feeding a flow of 100 ml(STP)/minute [millilitres of gas in standard temperature and pressure (1 atm, 25°C) per minute] of a mixture of 10% hydrogen - 90% nitrogen (by volume) and raising the temperature from ambient temperature to 450°C at a rate of 3°C/minute. This temperature is maintained for 2 hours, after which it is lowered to 110°C and the feeding conditions are changed to the specific reaction conditions of each example.
The gases are fed using mass flow controllers. Liquids are fed with a perfusor pump and an evaporator which is at 130°C.

<u>Example 3.1</u>

Reaction conditions are as follows:

| Nitrogen flow | 84.2 ml(STP)/min. |
|---------------|-------------------|
| Oxygen flow | 8.0 ml(STP)/min. |
| Methanol flow | 2.6 ml(liquid)/h. |
| [ml(liquid)/h: millilitres of liquid (25°C) per hour] | |

Results obtained are shown in Table 1.

Table 1

| Conversion of methanol | | | | | | | | | |
|------------------------|--------|---------------------------|--------|--------|--------|--------|--------|--------|--------|
| Catalyst | T (°C) | Conversion of methanol (%) | Molar percentages at reactor outlet | | | | | | |
| | | | $H_2$ | $O_2$ | $N_2$ | CO | $CO_2$ | $H_2O$ | $CH_3OH$ |
| A | 275 | 17.9 | 1.1 | 0.9 | 68.6 | 0.2 | 4.0 | 7.7 | 17.5 |

Table 1   (continued)

| Conversion of methanol | | | | | | | | | |
|---|---|---|---|---|---|---|---|---|---|
| Catalyst | T (°C) | Conversion of methanol (%) | Molar percentages at reactor outlet | | | | | | |
| | | | $H_2$ | $O_2$ | $N_2$ | CO | $CO_2$ | $H_2O$ | $CH_3OH$ |
| A | 325 | 65.5 | 25.0 | 0.1 | 55.9 | 1.7 | 11.3 | 0.0 | 6.0 |
| A | 360 | 76.9 | 27.7 | 0.1 | 54.2 | 3.1 | 11.0 | 0.0 | 3.9 |
| B | 275 | 9.8 | 1.2 | 3.4 | 69.9 | 0.2 | 2.1 | 3.6 | 19.6 |
| B | 325 | 54.9 | 21.5 | 0.0 | 57.8 | 1.2 | 10.3 | 1.2 | 8.1 |
| B | 360 | 74.1 | 27.1 | 0.0 | 54.6 | 2.7 | 11.2 | 0.0 | 4.4 |

The effluents are measured with an online gas chromatograph, with a thermal conductivity detector and helium as a carrier gas.

Example 3.2

Reaction conditions were as follows:

| | |
|---|---|
| Nitrogen flow | 55.2 ml(STP)/min. |
| Oxygen flow | 8.0 ml(STP)/min. |
| Methanol-water flow * | 3.9 ml(liquid)/h |

[* Water-methanol mixture: 67% methanol/33% water by volume]

Results obtained are shown in Table 2.

Table 2

| Conversion of methanol | | | | | | | | | |
|---|---|---|---|---|---|---|---|---|---|
| Catalyst | T (°C) | Conversion methanol (%) | Molar percentages at reactor outlet | | | | | | |
| | | | $H_2$ | $O_2$ | $N_2$ | CO | $CO_2$ | $H_2O$ | $CH_3OH$ |
| A | 275 | 48.0 | 19.1 | 0.0 | 35.9 | 0.1 | 10.5 | 25.6 | 8.9 |
| A | 325 | 73.1 | 26.5 | 0.0 | 33.6 | 0.3 | 12.8 | 22.6 | 4.3 |
| A | 360 | 94.4 | 31.1 | 0.0 | 34.0 | 0.4 | 14.5 | 19.1 | 0.9 |
| B | 275 | 51.5 | 17.5 | 0.0 | 40.7 | 0.1 | 10.2 | 22.1 | 9.4 |
| B | 325 | 75.4 | 26.6 | 0.0 | 35.0 | 0.3 | 12.6 | 21.4 | 4.1 |
| B | 360 | 93.2 | 30.6 | 0.0 | 34.0 | 0.5 | 14.3 | 19.6 | 1.1 |

Effluents are measured using an online gas chromatograph, with a thermal conductivity detector and helium as carrier gas.

The process used in this example is similar to a combination of the POM and SRM processes in a single reactor. The POM reaction is exothermic (ΔH: -192 kJ/mol) but produces a molar ratio of hydrogen produced per mole of methanol consumed of 2, while the SRM reaction is endothermic (ΔH: +49 kJ/mol) but is more favourable in terms of hydrogen production, as 3 moles of hydrogen are produced for each mole of methanol consumed. Combining these two processes in a single reactor is very attractive from an energetic and efficiency point of view, as the two processes may be combined such that the energy balance is essentially balanced and the amount of hydrogen produced is maximum. The process thus designed considers feeding the three reactants (air, methanol and water) in the correct proportions so that the heat required by the SRM reaction is provided by the exothermic POM reaction.

**Claims**

1. A method for preparing a catalyst which comprises:

    a) placing in contact urea and an aqueous solution of water soluble salts of copper (II), zinc (II) and aluminium (III), and heating to a temperature above 60°C;

    b) separating the precipitate resulting from stage a) and washing it until the wash water has a pH of approximately 6;

    c) drying the washed precipitate resulting from stage b); and

    d) calcinating the dry precipitate of stage c).

2. Method according to claim 1, in which said water soluble salts of copper, zinc and aluminium are copper (II) chloride, zinc (II) chloride and aluminium (II) chloride.

3. Method according to claims 1 to 2, in which the amount of urea added in stage a) is such that the molar ratio of urea/metals is at least 1.

4. Method according to claim 3, in which the amount of urea added in stage a) is such that the molar ratio of urea/metals is 3.

5. Method according to claims 1 to 4 in which the mixture of urea and the water-soluble salts of copper, zinc and aluminium in stage a) is heated to a temperature of 90°C.

6. Method according to claims 1 to 5, which in addition includes allowing the precipitate formed in stage a) to age before it is separated, with this precipitate maintained stirred at a temperature between 60°C and 100°C for at least 12 hours.

7. Method according to claims 1 to 6, in which the ageing of the precipitate formed in stage a) is performed by maintaining said precipitate stirred at the heating temperature of stage a) for 24 hours.

8. Method according to claims 1 to 7, in which drying of the washed precipitate resulting from stage b) is performed at a temperature between 50°C and 130°C.

9. Method according to claims 1 to 8, in which the dry precipitate resulting from stage c) is calcined at a temperature between 300°C and 450°C for a time between 3 and 5 hours in the presence of air.

10. Method according to claims 1 to 9 in which the dry precipitate resulting from stage c) presents prevailing formation of crystalline hydrotalcite phases.

11. Method according to claim 1-10 in which the catalyst resulting from calcination on stage d) presents a composition chosen among the following:

| Catalyst | Composition (%)* | | |
|---|---|---|---|
| | Cu | Zn | Al |
| A | 21.9 | 37.1 | 40.9 |
| B | 54.3 | 18.7 | 26.6 |
| C | 50.0 | 43.9 | 5.7 |
| D | 61.3 | 9.0 | 29.9 |
| E | 49.8 | 14.6 | 35.4 |

[* Molar percentages of the metals in the catalyst]

**EP 1 298 089 B1**

(continued)

| Catalyst | Composition (%)* | | |
|---|---|---|---|
| | Cu | Zn | Al |
| F | 48.7 | 17.3 | 33.9 |
| G | 25.8 | 49.1 | 24.9 |
| H | 70.2 | 21.6 | 8.2 |

[* Molar percentages of the metals in the catalyst]

**Patentansprüche**

1. Eine Methode zum Herstellen eines Katalysatoren, die Folgendes umfasst:

   a) Harnstoff und eine wässrige Lösung aus wasserlöslichen Salzen von Kupfer (II), Zink (II) und Aluminium (III) miteinander in Kontakt bringen und zu einer Temperatur über 60°C erhitzen;

   b) das Fällungsprodukt, das sich aus dem Schritt a) ergibt, abscheiden und waschen, bis das Waschwasser einen pH von etwa 6 hat;

   c) das gewaschene Fällungsprodukt, das sich aus dem Schritt b) ergibt, trocknen; und

   d) das getrocknete Fällungsprodukt, das sich aus dem Schritt c) ergibt, veraschen.

2. Methode gemäss Anspruch 1, bei der die besagten wasserlöslichen Salze von Kupfer, Zink und Aluminium Kupferchlorid (II), Zinkchlorid (II) und Aluminiumchlorid (II) sind.

3. Methode gemäss den Ansprüchen 1 bis 2, bei der die Menge an im Schritt a) zugefügtem Harnstoff so bemessen ist, dass das Molverhältnis von Harnstoff/Metallen mindestens 1 beträgt.

4. Methode gemäss Abschnitt 3, bei der die Menge an im Schritt a) zugefügtem Harnstoff so bemessen ist, dass das Molverhältnis von Harnstoff/Metallen mindestens 3 beträgt.

5. Methode gemäss den Ansprüchen 1 bis 4, bei der die Mischung von Harnstoff und wasserlöslichen Salzen von Kupfer, Zink und Aluminium aus dem Schritt a) auf eine Temperatur von 90°C erhitzt wird.

6. Methode gemäss den Ansprüchen 1 bis 5, die zusätzlich umfasst, dass das Fällungsprodukt, das im Schritt a) entstand, altern gelassen wird, bevor es abgeschieden wird, wobei dieses Fällungsprodukt bei einer Temperatur zwischen 60°C und 100°C mindestens 12 Stunden lang ständig gerührt wird.

7. Methode gemäss den Ansprüchen 1 bis 6, bei der das Altern des Fällungsprodukt aus dem Schritt a) durchgeführt wird, indem das besagte Fällungsprodukt bei der Erhitzungstemperatur des Schritts a) 24 Stunden lang ständig gerührt wird.

8. Methode gemäss den Ansprüchen 1 bis 7, bei der das Trocknen des gewaschenen Fällungsprodukts aus dem Schritt b) bei einer Temperatur zwischen 50°C und 130°C durchgeführt wird.

9. Methode gemäss den Ansprüchen 1 bis 8, bei der das Fällungsprodukt aus dem Schritt c) bei einer Temperatur zwischen 300°C und 450°C zwischen 3 und 5 Stunden lang in Anwesenheit von Luft verascht wird.

10. Methode gemäss den Ansprüchen 1 bis 9, bei der das trockenen Fällungsprodukt aus dem Schritt c) vornehmlich die Bildung von kristallinen Hydrotalcitphasen aufweist.

11. Methode gemäss Anspruch 1 bis 10, bei der der Katalysator, der aus der Veraschung des Schritts d) entsteht, eine Zusammensetzung aufweist, die aus Folgendem ausgewählt wird.:

| Katalysator | Zusammensetzung (%)* | | |
|---|---|---|---|
| | Cu | Zn | Al |
| A | 21,9 | 37,1 | 40,9 |
| B | 54,3 | 18,7 | 26,6 |
| C | 50,0 | 43,9 | 5,7 |
| D | 61,3 | 9,0 | 29,9 |
| E | 49,8 | 14,6 | 35,4 |
| F | 48,7 | 17,3 | 33,9 |
| G | 25,8 | 49,1 | 24,9 |
| H | 70,2 | 21,6 | 8,2 |

[*Molprozentsatz der Metalle im Katalysator]

## Revendications

**1.** Une méthode de préparation d'un catalyseur consistant à :

a) mettre en contact de l'urée et une solution aqueuse de sels hydrosolubles de cuivre (II), zinc (II) et aluminium (III), et réchauffer à une température supérieure à 60°C.

b) séparer le précipité issu de l'étape a) et rincer jusqu'à ce que l'eau de rinçage ait un pH approximativement égal à 6 ;

c) sécher le précipité rincé issu de l'étape b) ; et

d) calciner le précipité séché de l'étape c).

**2.** Méthode selon la revendication 1, dans laquelle les dits sels hydrosolubles de cuivre, zinc et aluminium sont du chlorure de cuivre (II), chlorure de zinc (II), et chlorure d'aluminium (II).

**3.** Méthode selon les revendications 1 à 2, dans laquelle la quantité d'urée ajoutée lors de l'étape a) est telle que le rapport molaire d'urée/métaux est au moins 1.

**4.** Méthode selon la revendication 3, dans laquelle la quantité d'urée ajoutée lors de l'étape a) est telle que le rapport molaire d'urée/métaux est 3.

**5.** Méthode selon les revendications 1 à 4, dans laquelle le mélange de l'urée et des sels hydrosolubles de cuivre, zinc et aluminium lors de l'étape a) est réchauffé à une température de 90°C a quantité d'urée ajoutée.

**6.** Méthode selon les revendications 1 à 5, qui inclut en outre le fait de laisser maturer le précipité formé lors de l'étape a) avant de le séparer, ce précipité ayant été brassé à une température de 60°C a 100°C pendant au moins 12 heures.

**7.** Méthode selon les revendications 1 à 6, dans laquelle la maturation du précipité formé lors de l'étape a) est réalisée en maintenant l'agitation dudit précipité à la température de réchauffement de l'étape a) pendant 24 heures.

**8.** Méthode selon les revendications 1 à 7, dans laquelle le séchage du précipité rincé issu de l'étape b) est réalisé à une température allant de 50°C à 130°C.

**9.** Méthode selon les revendications 1 à 8, dans laquelle le précipité sec issu de l'étape c) est calciné à une température allant de 300°C à 450°C pendant une période de temps allant de 3 a 5 heures en présence d'air.

10. Méthode selon les revendications 1 à 9, dans laquelle le précipité sec issu de l'étape c) présente une formation prédominante de phases cristallines d'hydrotalcite.

11. Méthode selon la revendication 1-10 dans laquelle le catalyseur issu de la calcination lors de l'étape d) présente une composition choisie parmi ce qui suit :

| Catalyseur | Composition (%)* | | |
|:---:|:---:|:---:|:---:|
| | Cu | Zn | Al |
| A | 21,9 | 37,1 | 40,9 |
| B | 54,3 | 18,7 | 26,6 |
| C | 50,0 | 43,9 | 5,7 |
| D | 61,3 | 9,0 | 29,9 |
| E | 49,8 | 14,6 | 35,4 |
| F | 48,7 | 17,3 | 33,9 |
| G | 25,8 | 49,1 | 24,9 |
| H | 70,2 | 21,6 | 8,2 |

[* rapport molaire des métaux dans le catalyseur).